# FASCICULE DE BREVET EUROPEEN

(11) **EP 0 839 593 B1**
(45) Date de publication et mention de la délivrance du brevet: **21.05.2003**
(21) Numéro de dépôt: 97402538.9
(22) Date de dépôt: 27.10.1997
(51) Int. Cl.: B21D 22/16

(54) **Procédé de fabrication d'une pièce creuse de révolution**
Verfahren zum Herstellen eines Hohlrevolutionskörpers durch Fliessdrehen
Method of making a hollow revolution part by fluoturning

(30) Priorité: 29.10.1996 FR 9613183
(43) Date de publication de la demande: 06.05.1998
(73) Titulaire: European Aeronautic Defence and Space Company - EADS France, 75016 Paris (FR)
(72) Inventeur: Bernard, Frédéric, 92150 Suresnes (FR)
(74) Mandataire: Poulin, Gérard

(56) Documents cités:
- EP-A- 0 410 884
- DE-A- 3 440 630
- FR-A- 2 559 078
- FR-A- 2 632 551
- US-A- 1 966 713
- US-A- 3 055 327
- US-A- 3 685 475

## Description

### Domaine technique

L'invention concerne un procédé permettant de fabriquer, par fluotournage, une pièce creuse de révolution présentant une épaisseur régulièrement évolutive sur au moins une partie de sa longueur.

Le procédé selon l'invention peut être utilisé pour fabriquer toute pièce creuse de révolution dont l'épaisseur est régulièrement évolutive sur au moins une partie de sa longueur, et dont les caractéristiques de résistance mécanique doivent être régulières et homogènes. A titre d'exemples non limitatifs, ce procédé s'applique à la fabrication d'éléments de structure tels que des barres ou des bielles de suspension ou de torsion à haute résistance mécanique, des réservoirs de fluide, des accumulateurs haute pression, etc., utilisables notamment dans les industries aéronautique et spatiale.

### Etat de la technique

La technique du fluotournage est utilisée couramment pour fabriquer des pièces creuses de révolution, en métal ou en alliage métallique présentant une relativement grande longueur et une paroi relativement mince.

Selon cette technique, on fabrique, par exemple par forgeage, une préforme cylindrique creuse dans laquelle le volume de matière est égal à celui de la pièce à fabriquer, mais qui est beaucoup plus courte et beaucoup plus épaisse que cette dernière. La préforme est placée sur un mandrin dont le contour correspond au profil intérieur de la pièce à fabriquer, et elle est déformée par au moins une molette, au cours d'une ou plusieurs passes, sur une machine à fluotourner. Plus précisément, la rotation de la préforme combinée à l'avance longitudinale des molettes entraînent une diminution de l'épaisseur de la préforme et une augmentation de sa longueur, par fluage du métal sur le mandrin.

L'utilisation de la technique du fluotournage se traduit par un fibrage et un écrouissage du métal. L'importance de cet écrouissage est directement conditionné par un facteur appelé "taux de réduction" qui correspond au rapport entre l'épaisseur initiale de la préforme et l'épaisseur finale de la pièce fluotournée.

Comme l'illustrent notamment les documents FR-A-2 668 085, EP-A-0 410 884 et FR-A-2 632 551, la technique du fluotournage est utilisée généralement pour fabriquer des réservoirs de fluide, des accumulateur, des générateurs de gaz ou des bouteilles haute pression à structure métallique. De telles pièces présentent toujours une ou plusieurs sections parfaitement cylindriques mais d'épaisseurs différentes, un ou deux fonds hémisphériques ainsi que des brides. Les fonds hémisphériques et les brides sont obtenus par usinage lors de la fabrication de la préforme, ou rajoutés par soudage. Dans les deux cas, le fluotournage est utilisé pour obtenir la ou les sections cylindriques d'épaisseurs différentes, à partir d'une préforme d'épaisseur constante. Par conséquent, le taux de réduction de la partie fluotournée de la pièce varie suivant les différentes épaisseurs de celle-ci. L'écrouissage du métal est donc également variable d'une extrémité à l'autre de la section fluotournée, ce qui se traduit par des performances mécaniques hétérogènes de la pièce obtenue.

D'autre part, il est connu de fabriquer des pièces cylindriques creuses telles que des réservoirs ou des propulseurs par roulage et soudage de tôles d'épaisseur uniforme. Toutefois, cette technique de fabrication est techniquement plus complexe et plus longue à mettre en oeuvre que la technique du fluotournage. En effet les opérations de soudage doivent être suivies de contrôles radiographiques, complétées ultérieurement par une succession d'usinages. De plus, l'utilisation de tôles d'épaisseur uniforme ne permet pas d'optimiser la masse, le profil et le coût de la pièce obtenue.

Par ailleurs, des pièces creuses allongées telles que des barres de torsion ou de suspension métalliques sont généralement réalisées jusqu'à présent par forgeage et usinage d'un tube, aux extrémités duquel sont soudées deux chapes usinées séparément. Cette technique a pour inconvénient de nécessiter la fourniture de tubes de même longueur que les barres, ce qui a pour conséquence que le métal formant la pièce n'est ni écroui, ni doté d'un fibrage quelconque. De plus, deux soudures sont nécessaires à l'obtention de la pièce. En outre, les chapes sont usinées après contrôle et soudage aux extrémités du tube. Enfin, l'utilisation de tubes d'épaisseur uniforme ne permet d'optimiser la masse et le profil qu'à condition d'effectuer un usinage long et coûteux.

Le document DE-A-3 440 630 décrit la fabrication par fluotournage, en deux passes successives, d'un boîtier présentant une épaisseur uniforme et une dureté évolutive.

Le document US-A-3 055 327 décrit la fabrication par repoussage d'une coupelle conique d'épaisseur variable, à partir d'une ébauche en forme de disque.

Enfin, le document US-A-1 966 713 décrit la fabrication d'un récipient en forme de tonneau, par assemblage bord à bord d'éléments réalisés précédemment par fluotournage.

### Exposé de l'invention

L'invention a principalement pour objet un procédé permettant de fabriquer une pièce creuse de révolution, d'épaisseur évolutive, dont les caractéristiques mécaniques sont homogènes et optimales sur toute sa longueur, pour une masse, un profil et un coût optimisés, contrairement aux pièces fabriquées par les techniques connues.

Selon l'invention, ce résultat est obtenu au moyen d'un procédé de fabrication d'une pièce creuse de révolution, d'épaisseur évolutive, caractérisé par le fait qu'il comprend les étapes suivantes :
- préparation d'une préforme relativement courte et épaisse par rapport à la pièce à fabriquer, cette préforme présentant, sur au moins une partie de sa longueur, une épaisseur évolutive, telle que l'épaisseur de chaque tronçon élémentaire de cette partie de la préforme soit sensiblement égale à l'épaisseur d'un tronçon élémentaire correspondant de la pièce à fabriquer, multipliée par un coefficient constant ; et
- réduction de l'épaisseur de la préforme, au moins sur ladite partie de sa longueur, par fluotournage, selon un taux de réduction uniforme, égal à l'inverse dudit coefficient.

Lorsque la pièce à fabriquer comprend un fond à chacune de ses extrémités, on prépare avantageusement deux préformes comprenant chacune une partie tubulaire d'épaisseur évolutive et un fond fermant cette partie à une extrémité. On réduit ensuite, par fluotournage, l'épaisseur de la partie tubulaire de chacune des préformes, puis on soude bout à bout les parties tubulaires par leurs extrémités opposées aux fonds. Il est à noter que l'expression "partie tubulaire" désigne indifféremment une partie cylindrique, une partie conique ou une partie de révolution de forme plus complexe, dont la génératrice est incurvée au moins en partie.

Pour fabriquer une pièce comprenant deux fonds, on utilise avantageusement deux préformes identiques.

Dans une forme de réalisation préférentielle, mais non limitative, de l'invention, on utilise deux préformes comprenant chacune une partie tubulaire dont l'épaisseur diminue régulièrement en allant vers le fond.

### Brève description des dessins

On décrira à présent, à titre d'exemple non limitatif, une forme de réalisation préférentielle de l'invention, en se référant aux dessins annexés, dans lesquels :
- la figure 1 est une vue en coupe longitudinale qui représente une préforme dont l'élaboration constitue la première étape du procédé selon l'invention, cette préforme étant destinée à la fabrication d'une barre de suspension ;
- la figure 2 est une vue en coupe longitudinale qui représente, à plus petite échelle, la pièce obtenue à partir de la préforme de la figure 1, après son passage sur une machine à fluotourner ; et
- la figure 3 est une vue en coupe longitudinale comparable aux figures 1 et 2, qui représente, encore à plus petite échelle, la barre de suspension obtenue en soudant bout à bout deux pièces identiques, telles qu'illustrées sur la figure 2.

### Exposé détaillé d'une forme de réalisation préférentielle

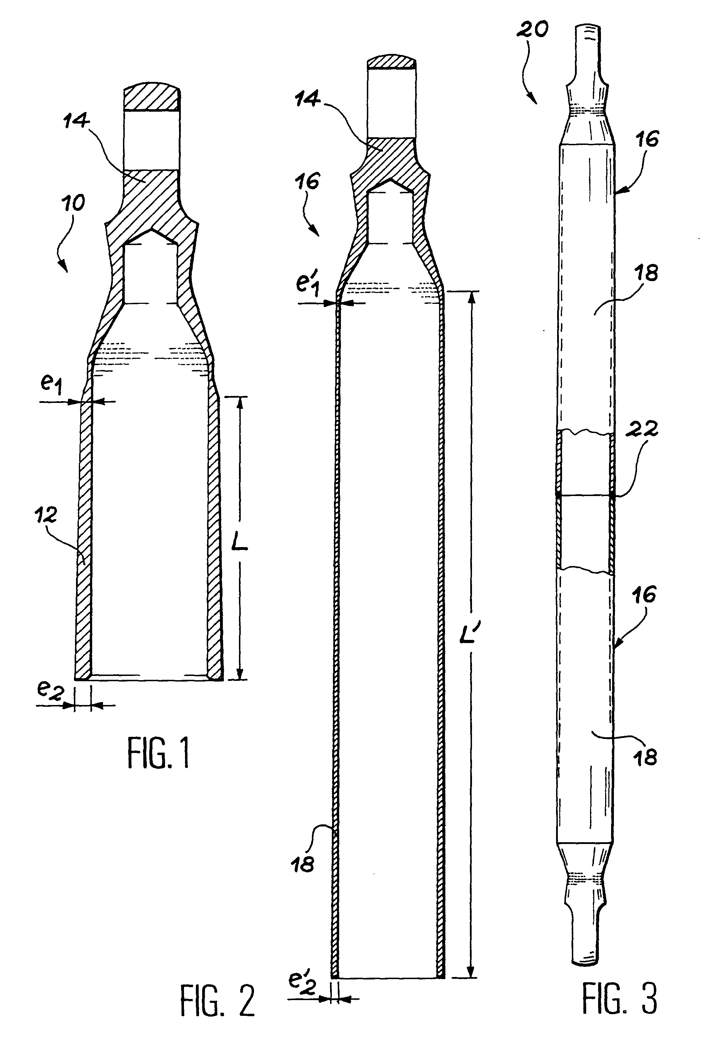

Sur la figure 1, on a représenté une préforme 10 destinée à la fabrication ultérieure d'une barre de suspension. Il est important de noter que cette application n'est donnée qu'à titre d'exemple, le procédé selon l'invention pouvant être utilisé dans tous les cas où l'on désire pouvoir fabriquer une pièce métallique creuse de révolution présentant une épaisseur évolutive, relativement faible, et une grande longueur comparée à cette épaisseur. Ainsi, le procédé selon l'invention peut aussi être utilisé pour fabriquer notamment des barres de torsion, des réservoirs, des accumulateurs, des générateurs de gaz, des bouteilles haute pression, etc. en un métal tel que de l'acier, un métal léger, ou autre.

La préforme 10 est préparée selon les techniques classiques préalables au fluotournage, notamment par forgeage puis par usinage partiel ou total. D'autres techniques de préparation peuvent toutefois êtres utilisées sans sortir du cadre de l'invention.

La préforme 10 comprend essentiellement une partie tubulaire 12, ainsi qu'un fond 14 fermant la partie tubulaire 12 à l'une de ses extrémités. La préparation de la préforme 10 est telle que la partie tubulaire 12 et le fond 14 soient réalisés d'un seul tenant.

La forme et les dimensions du fond 14 de la préforme 10 sont identiques à celles de l'extrémité de la barre de suspension que l'on désire fabriquer. De façon plus générale, les caractéristiques telles que la forme et les dimensions du fond de la préforme sont les mêmes que celles de la pièce à fabriquer. Par conséquent, ces caractéristiques dépendent essentiellement de la nature de la pièce que l'on désire réaliser. Le fond 14 peut donc présenter des formes et des dimensions très différentes, d'une pièce à l'autre, sans sortir du cadre de l'invention.

Conformément à l'invention, la partie tubulaire 12 de la préforme 10 comporte au contraire des caractéristiques bien précises, différentes de celles de la partie tubulaire de la pièce à fabriquer, mais qui dépendent directement des caractéristiques de cette dernière partie.

De façon plus précise, la partie tubulaire 12 de la préforme 10 présente une longueur L relativement courte par rapport à celle de la partie tubulaire de la pièce à fabriquer, et une épaisseur régulièrement évolutive d'une extrémité à l'autre, et supérieure à celle de la pièce à fabriquer. Le caractère plus court et plus épais de la partie tubulaire de la préforme 10 par rapport à la partie tubulaire de la pièce à fabriquer est une caractéristique habituelle lorsque la technique du fluotournage est utilisée. En revanche, le caractère régulièrement évolutif de l'épaisseur de cette partie tubulaire 12 de la préforme 10 constitue une caractéristique originale spécifique à l'invention.

Plus précisément, dans la forme de réalisation illustrée sur la figure 1, l'épaisseur de la partie tubulaire 12 de la préforme 10 augmente régulièrement depuis une valeur e1 jusqu'à une valeur e2, en s'éloignant du fond 14 de la préforme. Les valeurs e1 et e2 de l'épaisseur sont déterminées avec précision, en fonction des épaisseurs de la partie tubulaire de la pièce à fabriquer, afin que l'épaisseur de chaque tronçon élémentaire de la partie tubulaire 12 soit sensiblement égale à l'épaisseur d'un tronçon élémentaire correspondant de la partie tubulaire de la pièce à fabriquer, multipliée par un coefficient constant.

Par ailleurs et de façon classique lorsque la technique du fluotournage est utilisée, le diamètre intérieur de la partie tubulaire 12 de la préforme 10 est identique à celui de la partie tubulaire de la pièce à fabriquer. Dans l'exemple illustré sur les figures, qui concerne la fabrication d'une pièce dont la partie tubulaire est cylindrique, ce diamètre intérieur est constant d'une extrémité à l'autre de la partie tubulaire 12.

A titre d'exemple uniquement illustratif et nullement limitatif de l'invention, la longueur L peut être d'environ 150 mm, les épaisseurs e1 et e2 étant alors égales à environ 4,5 mm et 7,5 mm, respectivement.

La préforme 10 illustrée sur la figure 1 est ensuite soumise à une opération de fluotournage qui permet de transformer, en une ou plusieurs passes, l'ébauche 10 en une pièce 16 telle qu'illustrée sur la figure 2. La pièce 16 ainsi obtenue comprend le fond 14, dont la forme et les dimensions restent inchangées par rapport à celles de l'ébauche, et une partie tubulaire 18 obtenue par fluotournage de la partie tubulaire 12 de l'ébauche.

La partie tubulaire 18 de la pièce 16 présente une longueur L' très supérieure à la longueur L de la partie tubulaire 12 de l'ébauche, et une épaisseur sensiblement réduite par rapport à celle de cette partie tubulaire 12.

Plus précisément, conformément à l'invention, la partie tubulaire 18 de la pièce 16 présente elle aussi une épaisseur régulièrement évolutive d'une extrémité à l'autre. Cette épaisseur régulièrement évolutive de la partie tubulaire 18 de la pièce 16 est obtenue, lors du fluotournage, en réduisant l'épaisseur de la partie tubulaire 12 de la préforme 10 selon un taux de réduction uniforme, d'une extrémité à l'autre de cette partie tubulaire. Ce taux de réduction uniforme est égal à l'inverse du coefficient qui a servi initialement à déterminer l'épaisseur de chaque tronçon élémentaire de la partie tubulaire 12 de la préforme, en multipliant par ce coefficient l'épaisseur d'un tronçon élémentaire correspondant de la pièce à fabriquer.

Grâce à cette caractéristique, il devient possible de fabriquer une pièce creuse de révolution dont l'épaisseur évolue en continu d'une extrémité à l'autre, en accord avec les exigences de tenue mécanique imposées à la pièce, sans que celle-ci ne présente des caractéristiques mécaniques hétérogènes d'une extrémité à l'autre. En effet, du fait que le taux de réduction est uniforme sur toute la longueur de la partie tubulaire 18 de la pièce 16, l'écrouissage engendré par le fluotournage est pratiquement constant sur toute la longueur de la pièce et les performances mécaniques de cette dernière peuvent être homogènes et optimales.

Dans l'exemple numérique donné précédemment, à titre purement illustratif, la partie tubulaire 18 de la pièce 16 obtenue après fluotournage, à partir de la préforme 10, peut notamment présenter une longueur L' d'environ 240 mm, une épaisseur e'1 d'environ 1,5 mm à son extrémité attenante au fond 14 et une épaisseur e'2 d'environ 2,5 mm à son extrémité ouverte. Le taux de réduction uniforme est, dans ce cas, de 0,33.

Comme on l'a illustré sur la figure 3, deux pièces 16 identiques peuvent être utilisées pour fabriquer une barre de suspension 20. Les deux pièces 16 sont alors soudées bout à bout, selon une ligne de soudure 22, par les extrémités ouvertes de leurs parties tubulaires 18.

On réalise ainsi une pièce creuse de révolution, fermée à ses deux extrémités par les fonds 14, et dont la paroi cylindrique présente une épaisseur qui évolue en continu d'une extrémité à l'autre. Plus précisément, l'épaisseur de cette paroi cylindrique est plus élevée au centre de la barre de suspension qu'à proximité des fonds 14.

Il est ainsi possible de fabriquer une barre de suspension comportant une seule soudure, en un matériau dont les caractéristiques sont homogènes, avec une épaisseur optimisée pour répondre aux besoins spécifiques à satisfaire, tels que la résistance à la flexion ou à la torsion dans le cas d'une barre de suspension, en minimisant la quantité de matière et par conséquent le poids. A ces avantages s'ajoutent une grande reproductibilité, une grande précision dimensionnelle, une grande simplicité et une grande souplesse.

Bien entendu, ces avantages se retrouvent lors de la fabrication d'autres pièces creuses de révolution selon le procédé de l'invention. Ainsi, dans le cas où la pièce fabriquée est une pièce soumise à une pression interne, telle qu'un réservoir de fluide, le caractère évolutif de l'épaisseur de la paroi améliore sensiblement la tenue au gonflement, tout en minimisant le poids de la structure.

## Revendications

1. Procédé de fabrication d'une pièce creuse de révolution (16), d'épaisseur évolutive, **caractérisé par le fait qu'**il comprend les étapes suivantes :
- préparation d'une préforme (10) relativement courte et épaisse par rapport à la pièce à fabriquer, cette préforme présentant, sur au moins une partie (12) de sa longueur, une épaisseur évolutive, telle que l'épaisseur de chaque tronçon élémentaire de cette partie (12) de la préforme soit sensiblement égale à l'épaisseur d'un tronçon élémentaire correspondant de la pièce (16) à fabriquer, multipliée par un coefficient constant ; et
- réduction de l'épaisseur de la préforme (10), au moins sur ladite partie (12) de sa longueur, par fluotournage, selon un taux de réduction uniforme, égal à l'inverse dudit coefficient.

2. Procédé selon la revendication 1, dans lequel on prépare deux préformes (10) comprenant chacune une partie tubulaire (12) d'épaisseur évolutive et un fond (14) fermant cette partie à une extrémité ; on réduit, par fluotournage, l'épaisseur de ladite partie tubulaire de chaque préforme ; et on soude bout à bout les parties tubulaires (18) des pièces (16) obtenues, par leurs extrémités opposées aux fonds (14).

3. Procédé selon la revendication 2, dans lequel on réalise deux préformes (10) identiques.

4. Procédé selon l'une quelconque des revendications 2 et 3, dans lequel on prépare deux préformes (10) comprenant chacune une partie tubulaire (12) dont l'épaisseur diminue régulièrement en allant vers le fond (14).

## Patentansprüche

1. Verfahren zur Herstellung eines Rotationshohlkörpers (16) mit sich verändernder Dicke, **dadurch gekennzeichnet, dass** es die folgenden Schritte aufweist:
- Anfertigen einer bezüglich des herzustellenden Elements verhältnismäßig kurzen und dicken Vorform (10), wobei diese Vorform über wenigstens einen Teil (12) ihrer Länge eine sich verändernde Dicke aufweist, derart, dass die Dicke jedes Elementarabschnitts dieses Teils (12) der Vorform im Wesentlichen gleich der Dicke eines entsprechenden Elementarabschnitts des herzustellenden Elements (16) multipliziert mit einem konstanten Koeffizienten ist; und
- Reduzieren der Dicke der Vorform (10) wenigstens über den Teil (12) ihrer Länge durch Fließdrehen gemäß einer gleichmäßigen Reduktionsrate, die gleich dem Inversen des Koeffizienten ist.

2. Verfahren nach Anspruch 1, bei dem man zwei Vorformen (10) anfertigt, die jeweils einen Rohrteil (12) mit sich verändernder Dicke sowie einen Boden (14) umfassen, der diesen Teil an einem Ende abschließt; bei dem man ferner durch Fließdrehen die Dicke des Rohrteils jeder Vorform reduziert; und bei dem man die Rohrteile (18) der erhaltenen Elemente (16) an ihren den Böden (14) entgegengesetzten Enden Ende an Ende zusammenschweißt.

3. Verfahren nach Anspruch 2, bei dem man zwei identische Vorformen (10) herstellt.

4. Verfahren nach einem der Ansprüche 2 und 3, bei dem man zwei Vorformen (10) anfertigt, die jeweils einen Rohrteil (12) umfassen, dessen Dicke zum Boden (14) hin gleichmäßig abnimmt.

## Claims

1. Method of manufacturing a hollow component of revolution (16), of changing thickness, **characterized in that** it comprises the following steps:
- preparing a preform (10) which is relatively short and thick by comparison to the part which is to be manufactured, this preform having, over at least a part (12) of its length, a changing thickness, such that the thickness of each elementary portion of this part (12) of the preform is roughly equal to the thickness of a corresponding elementary portion of the part (16) that is to be manufactured, multiplied by a constant factor; and
- reducing the thickness of the preform (10), at least over the said component (12) of its length, by flowturning, with a uniform reduction ratio equal to the inverse of the said factor.

2. Method according to Claim 1, in which two preforms (10) are prepared, each comprising a tubular part (12) of changing thickness and a closed end (14) closing this part at one end; flowturning is used to reduce the thickness of the said tubular part of each preform; and the tubular parts (18) of the components (16) obtained are butt-welded together via their ends opposite the closed ends (14).

3. Method according to Claim 2, in which two identical preforms (10) are made.

4. Method according to either one of Claims 2 and 3, in which two preforms (10) are prepared, each comprising a tubular part (12) the thickness of which decreases uniformly towards the closed end (14).
